**Europäisches Patentamt**

**European Patent Office**

**Office européen des brevets**

(19)

(11) Veröffentlichungsnummer : **0 526 453 B1**

(12)

# EUROPÄISCHE PATENTSCHRIFT

(45) Veröffentlichungstag der Patentschrift :
**28.12.94 Patentblatt 94/52**

(51) Int. Cl.$^5$ : **H02M 7/48**

(21) Anmeldenummer : **91902385.3**

(22) Anmeldetag : **24.01.91**

(86) Internationale Anmeldenummer :
**PCT/EP91/00140**

(87) Internationale Veröffentlichungsnummer :
**WO 91/17600 14.11.91 Gazette 91/26**

(54) **VERFAHREN UND SCHALTUNGSANORDNUNG ZUM BETRIEB EINER WECHSELRICHTERANORDNUNG MIT n PARALLEL BETRIEBENEN STELLGLIEDERN.**

(30) Priorität : **27.04.90 EP 90108061**

(43) Veröffentlichungstag der Anmeldung :
**10.02.93 Patentblatt 93/06**

(45) Bekanntmachung des Hinweises auf die
Patenterteilung :
**28.12.94 Patentblatt 94/52**

(84) Benannte Vertragsstaaten :
**CH DE FR GB IT LI SE**

(56) Entgegenhaltungen :
**DE-A- 3 602 496**

(73) Patentinhaber : **SIEMENS
AKTIENGESELLSCHAFT
Wittelsbacherplatz 2
D-80333 München (DE)**

(72) Erfinder : **MICKAL, Hermann
Albrecht-Dürer-Str. 10
D-8520 Erlangen (DE)**
Erfinder : **DUCA, Christian
Eskilstunastr. 25
D-8520 Erlangen (DE)**

EP 0 526 453 B1

## Beschreibung

Die Erfindung bezieht sich auf ein Verfahren zum Betrieb einer Wechselrichteranordnung mit n parallel betriebenen jeweils aus m Stromrichterventilen bestehenden Stellgliedern, wobei diese n Stellglieder eingangsseitig aus einer gemeinsamen Gleichspannungsquelle versorgt werden und ausgangsseitig mittels eines Transformators mit nachgeschalteter Filterkondensatorschaltung miteinander verknüpft sind, wobei jedes Stellglied mit wenigstens m/2-l Meßeinrichtungen zur Erfassung von Istwerten der Phasenausgangsströme versehen ist und wobei die Ausgänge der Wechselrichteranordnung mit Meßeinrichtungen zur Erfassung von Istwerten der Phasenausgangsspannung und zur Erfassung von Istwerten der Kondensatorphasenströme versehen sind, und auf eine Schaltungsanordnung zur Durchführung des Verfahrens.

Aus der DE 36 02 496 C2 ist eine Wechselrichteranordnung mit n parallel betriebenen Wechselrichtern bekannt, deren Ausgangsströme zu einem Summenstrom addiert so geregelt werden, daß ihre Phasen im wesentlichen übereinstimmen und ihre Beträge je das l/n-fache des Betrages des Summenstromes sind. Jeder Wechselrichter enthält einen Leistungsteil und eine Regel- und Steuereinrichtung. Als Leistungsteil ist eine vollgesteuerte l-Phasen-Brückenschaltung vorgesehen. Die Regel- und Steuereinrichtung enthält einen Magnetisierungsstromregler, einen Spannungsregler, einen Komparator, einen Dreiecksgenerator und mehrere Addierer. Außerdem umfaßt diese Wechselrichteranordnung Meßeinrichtungen zur Erfassung der Ausgangsströme aller n Wechselrichter, eine Summeneinrichtung zur Bildung eines Summenstromsignals entsprechend der Summe der erfaßten Ausgangsströme, eine Teilungseinrichtung zur Erzeugung eines Strombezugssignals, das dem durch n geteilten Summenstrom entspricht, und Stromistwertbildungseinrichtungen zur Bildung von Stromistwertsignalen. Ferner ist eine Stromsollwertbildungseinrichtung zur Erzeugung eines Stromsollwertes entsprechend dem Betrag derjenigen Komponente des Strombezugssignals vorgesehen, deren Phase gleich einer Bezugsphase ist, bilden (n-1) Stromistwertbildungseinrichtungen (n-1) Stromistwertsignale, von denen jedes den Betrag derjenigen Komponente des Ausgangsstromes eines jeweils anderen von (n-1) der Wechselrichter entspricht, deren Phase gleich der Bezugsphase ist und es sich bei den mit der Differenz zwischen dem Stromsollwertsignal und einem jeweiligen Stromistwertsignal der Ausgangsströme beaufschlagten Einrichtung um (n-1) Stromregler handelt, derart, daß die Ausgangsströme von (n-1) der Wechselrichter geregelt werden. Nachteilig bei dieser Wechselrichteranordnung ist, daß n komplette Wechselrichter (Leistungsteil und Regel- und Steuereinrichtung) parallel betrieben werden, wobei noch eine übergeordnete Laststromausgleichsregelung erforderlich ist.

Der Erfindung liegt nun die Aufgabe zugrunde, die eingangs genannte Wechselrichteranordnung dermaßen zu vereinfachen, daß keine übergeordnete Laststromregelung benötigt wird und der Aufwand für die Regel- und Steuereinrichtung von der Anzahl der parallel betriebenen Wechselrichter bzw. Teilwechselrichter unabhängig wird.

Diese Aufgabe wird erfindungsgemäß durch die kennzeichnenden Merkmale des Anspruchs 1 gelöst. Bei dem erfindungsgemäßen Verfahren geht man davon aus, daß die n parallel betriebenen jeweils aus m Stromrichterventilen bestehenden Stellglieder als ein Stellglied betrachtet werden. Deshalb werden pro Phase mittels des Ist- und Sollwertes der Phasenausgangsspannung der Wechselrichteranordnung und des Ist- und Sollwertes des Kondensatorstromes der Filterkondensatorschaltung mit Hilfe einer Spannungsregelung mit unterlagerter Stromregelung und einer Abtastspannung m Ansteuersignale erzeugt. D.h., für jedes der m Stromrichterventile eines Stellgliedes ein Steuersignal. Da jedoch n Stellglieder parallel betrieben sind, wird jeweils ein Ansteuersignal n parallel betriebenen Stromrichterventilen zugeführt.

Pro Phase und pro Stellglied sind immer zwei Stromrichterventile vorgesehen, die komplementär schalten. Der Schaltzustand der mxn Stromrichterventile der n Stellglieder wird einzeln erfaßt. Die Schaltzustände der n parallel betriebenen Stromrichterventile der n Stellglieder bilden genau dann ein Freigabesignal, wenn alle n parallel betriebenen Stromrichterventile im Aus-Zustand sind. D.h., erst mit dem Aus-Zustandssignal des Stromrichterventils mit der größten Speicherzeit der n parallel betriebenen Stromrichterventile, wird das Ansteuersignal für die n parallel betriebenen komplementär schaltenden Stromrichterventile freigegeben. Durch die Generierung von jeweils m Freigabesignalen werden jeweils die n parallel betriebenen Stromrichterventile der n Stellglieder von der Regel- und Steuereinrichtung jeweils als ein Stromrichterventil angesehen. Somit erreicht man, daß sich der Laststrom symmetrisch auf die n Stellglieder aufteilt, ohne daß dabei eine Stromausgleichsregelung benötigt wird.

Da die Stellglieder mit nichtlinearen Stromrichterventilen aufgebaut sind, wobei nicht vorausgesetzt werden kann, daß jeweils n parallel betriebene Stromrichterventile übereinstimmende Kenndaten besitzen, sind die Ausgangsspannungen der Stellglieder verschieden und können auch unterschiedliche Spannungszeitflächen enthalten (Gleichanteil). Die Folge davon sind Sättigungserscheinungen in magnetischen passiven Bauteilen.

Bei einem vorteilhaften Verfahren werden die erfaßten Istwerte der Phasenausgangsströme phasenmäßig jeweils zu einem Phasensummenstrom addiert und anschließend zu einem Korrekturwert integriert. Jeder Phasenkorrekturwert wird von einer korrespondierenden erzeugten Phasenstellspannung subtrahiert, aus der dann mittels einer Abtastspannung Ansteuersignale erzeugt werden. Mittels dieser Gleichanteilregelung des Phasensummenstromes kann der Transformator nicht mehr in Sättigung gehen.

Eine Schaltungsanordnung zur Durchführung des Verfahrens und die vorteilhaften Ausgestaltungen dieser Schaltungsanordnung sind den Ansprüchen 3 bis 6 zu entnehmen. Durch die Verwendung der Logikschaltung, die jedes der m Ansteuersignale jeweils n parallel betriebenen Stromrichterventilen der n Stellglieder gemeinsam zuführt und jeweils ein Freigabesignal für die n parallel betriebenen komplementär schaltenden Stromrichterventilen generiert, wird nur eine Schaltungsanordnung, auch genannt Regel- und Steuereinrichtung, für n Stellglieder benötigt. D.h., die n parallel betriebenen Stellglieder erscheinen für die Regel- und Steuereinrichtung als ein Stellglied. Durch einfache Erweiterungen der Logikschaltung und des Stromsummenbildners kann jederzeit die Regel- und Steuereinrichtung für n Stellglieder auf n+x Stellglieder erweitert werden. Bei der Erweiterung von n Stellglieder auf n+x Stellglieder muß die Anzahl von Primär- und Sekundärwicklungen des Transformators auch von n auf n+x Primär- und Sekundärwicklungen erweitert werden.

Zur weiteren Erläuterung der Erfindung wird auf die Zeichnung Bezug genommen, in der ein Ausführungsbeispiel einer Wechselrichteranordnung mit drei parallel betriebenen Stellgliedern schematisch veranschaulicht ist.

| | |
|---|---|
| Figur 1 | zeigt eine Wechselrichteranordnung mit drei parallel betriebenen Stellgliedern, in |
| Figur 2 | ist ein Blockschaltbild einer Stellspannungseinrichtung der Regel- und Steuereinrichtung nach Figur 1 veranschaulicht, die |
| Figur 3 | zeigt einen m-ten Teil einer Logikschaltung der Regel- und Steuereinrichtung nach Figur 1, in |
| Figur 4 | ist der Phasenausgangsstrom $I_{RW1}$ und $I_{RW2}$ zweier parallel betriebener Stellglieder der Wechselrichteranordnung nach Figur 1 in einem Diagramm über der Zeit t dargestellt, in |
| Figur 5 | ist ein Ansteuersignal $U_{AT1}$ in einem Diagramm über der Zeit t dargestellt, in den |
| Figuren 6 und 7 | sind die Basisströme zweier der n parallel betriebenen Stromrichterventile jeweils in einem Diagramm über der Zeit t veranschaulicht, in |
| Figur 8 | ist ein Freigabesignal $U_{FS1}$ in einem Diagramm über der Zeit t dargestellt, in |
| Figur 9 | ist ein zum Ansteuersignal nach Figur 5 komplementäres Ansteuersignal $U_{AT2}$ in einem Diagramm über der Zeit t veranschaulicht, und in den |
| Figuren 10 und 11 | sind die Basisströme zweier der n parallel betriebenen Stromrichterventile, die vom komplementären Ansteuersignal angesteuert sind, jeweils in einem Diagramm über der Zeit t dargestellt. |

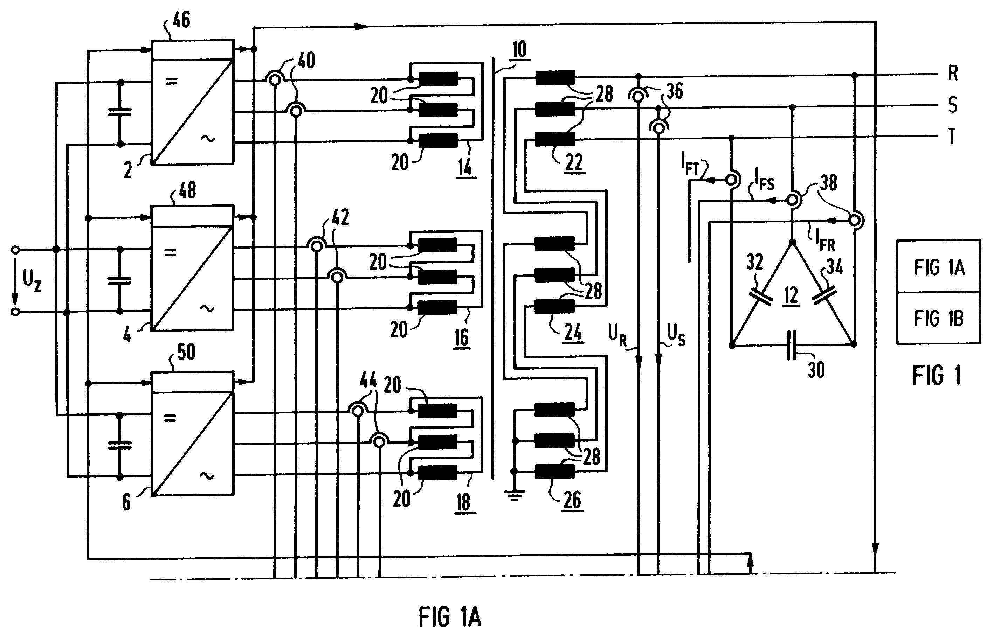

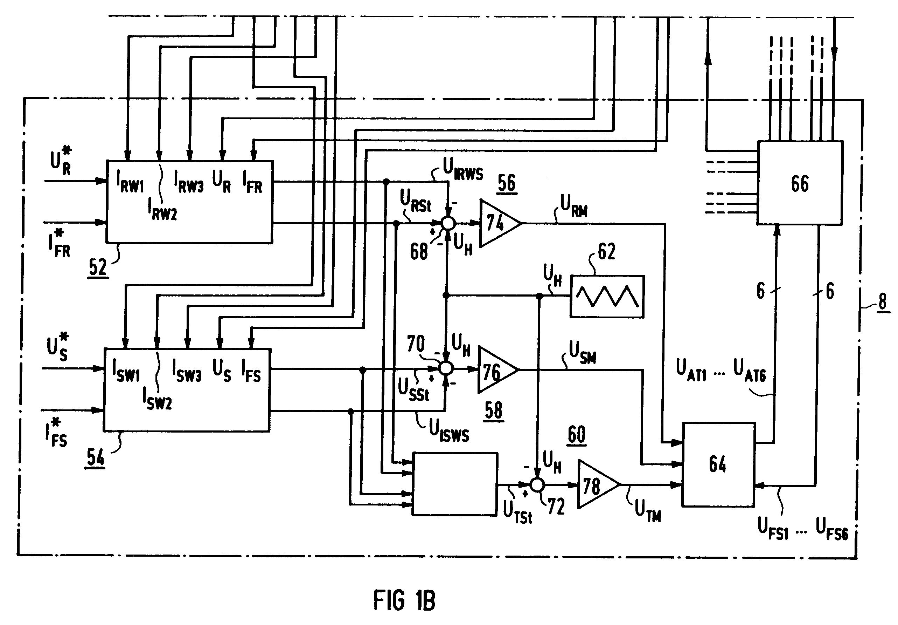

Die in Figur 1 dargestellte Wechselrichteranordnung enthält drei Stellglieder 2, 4 und 6 und eine gemeinsame Regel- und Steuereinrichtung 8. Die beschriebene Wechselrichteranordnung eignet sich grundsätzlich für eine beliebige Anzahl n von parallel zu betreibenden Stellgliedern und für die in Figur 1 dargestellte und nachfolgend beschriebene Anordnung ist lediglich beispielhaft der Fall n=3 und m=6 gewählt. Die Stellglieder 2, 4 und 6 weisen untereinander den gleichen Aufbau auf. Das Stellglied 2 bzw. 4 bzw. 6 besteht aus sechs Stromrichterventilen $T1_1$ bis $T6_1$ bzw. $T1_2$ bis $T6_2$ bzw. $T1_3$ bis $T6_3$, die als Drei-Phasen-Brückenschaltung aufgebaut sind. Als Ventile $T1_1$ bis $T6_1$ bzw. $T1_2$ bis $T6_2$ bzw. $T1_3$ bis $T6_3$ sind handelsübliche Transistormodule mit integrierten Rückarbeitsdioden, auch Freilaufdioden genannt, eingesetzt. Es sei an dieser Stelle hervorgehoben, daß das hier beschriebene Verfahren und die beschriebbene Wechselrichteranordnung aus den eingangs genannten Gründen insbesondere für die schnellschaltenden, aber in ihrer Leistung begrenzten Leistungstransistoren geeignet sind. Dessen ungeachtet lassen sich Verfahren und Anordnung auch bei Stellgliedern einsetzen, deren Brückenschaltungen nicht Leistungstransistoren, sondern Thyristoren, GTOs oder andere Schaltelemente als Ventile aufweisen.

Die Stellglieder 2, 4 und 6 werden eingangsseitig aus einer gemeinsamen Gleichspannungsquelle $U_Z$ gespeist. Als Gleichspannungsquelle $U_Z$ kann eine Batterie oder ein netzgespeister Gleichrichter vorgesehen sein, die in dieser Figur nicht dargestellt sind. Ausgangsseitig sind die Stellglieder 2, 4 und 6 mittels eines Transformators 10 mit nachgeschalteter Filterkondensatorschaltung 12 miteinander verknüpft. Der Transformator 10 hat auf einem Kern drei Primärwicklungen 14, 16 und 18, die jeweils aus drei im Dreieck geschalteten Wicklungen 20 bestehen, und drei Sekundärwicklungen 22, 24 und 26, die jeweils ebenfalls aus drei Wicklungen 28 bestehen. Diese Wicklungen 28 der Sekundärwicklungen 22, 24 und 26 sind phasenmäßig elektrisch in Reihe geschaltet. Durch die Verwendung dieses Transformators 10 sind die Stellglieder 2, 4 und 6 gegeneinander entkoppelt. Die Entkopplung gleicht der Streuinduktivitäten zwischen den Primärwicklungen 14, 16 und 18. Da die Streuungen zwischen den Primär- und Sekundärwicklungen 14, 16, 18 und 22, 24 und 26 gleich und groß genug sind, werden keine Ausgangsfilterinduktivitäten benötigt. Die Filterkondensatorschaltung 12, die aus drei im Dreieck geschalteten Filterkondensatoren 30, 32 und 34 besteht, glättet mit den Streuinduktivitäten der Primär- und Sekundärwicklungen 14, 16, 18 und 22, 24, 26 die Ausgangsspannungen $U_R$, $U_S$ und $U_T$. Wenigstens die Istwerte zweier Phasenausgangsspannungen $U_R$ und $U_S$ werden mittels Meßeinrichtungen 36 und die Istwerte wenigstens zweier Kondensatorphasenströme $I_{FR}$ und $I_{FS}$ werden mittels Meßeinrichtungen 38 erfaßt.

Jedes Stellglied 2 bzw. 4 bzw. 6 weist ausgangsseitig wenigstens zwei Meßeinrichtungen 40 bzw. 42 bzw. 44 auf, mit denen die Istwerte zweier Phasenausgangsströme $I_{RW1}$ und $I_{SW1}$ bzw. $I_{RW2}$ und $I_{SW2}$ bzw. $I_{RW3}$ und $I_{RW3}$ erfaßt werden. Jedem Stellglied 2 bzw. 4 bzw. 6 ist außerdem eine Ansteuereinrichtung 46 bzw. 48 bzw. 50 zugeordnet, wobei jede Ansteuereinrichtung 46 bzw. 48 bzw. 50 für jedes Stromrichterventil $T1_1$ bis $T6_1$ bzw. $T1_2$ bis $T6_2$ bzw. $T1_3$ bis $T6_3$ eine Ansteuerschaltung aufweist.

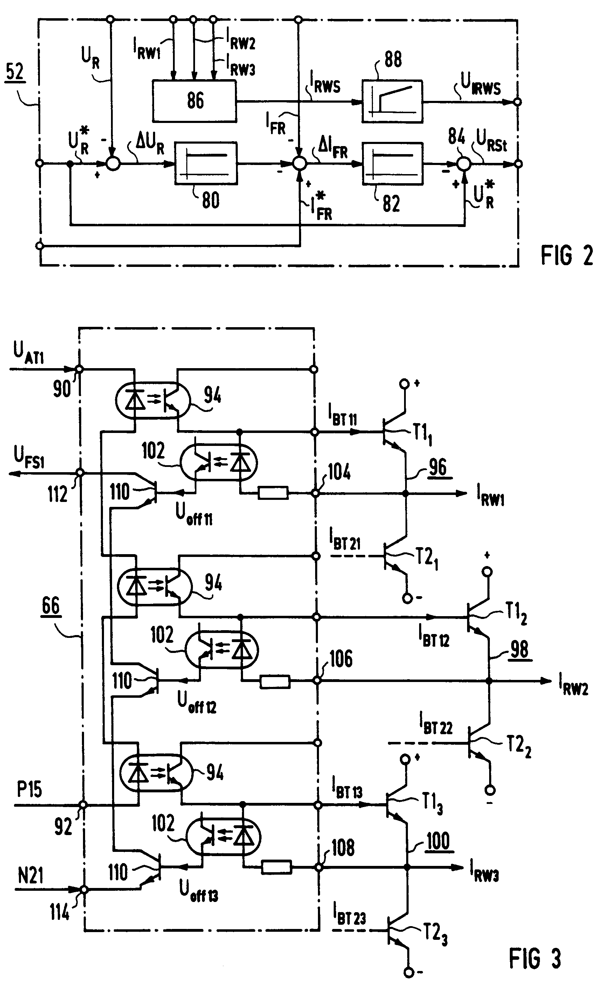

Die Regel- und Steuereinrichtung 8, d.h. die Schaltungsanordnung des erfindungsgemäßen Verfahrens, enthält zwei Stellspannungseinrichtungen 52 und 54, drei Modulationsstufen 56, 58 und 60, einen Abtastspannungsgenerator 62, eine Ansteuersignaleinrichtung 64 und eine Logikschaltung 66. In Figur 2 ist ein Blockschaltbild einer Stellspannungseinrichtung 52 und in Figur 3 ist der Aufbau der Logikschaltung 66 dargestellt, wobei wegen der Übersichtlichkeit nur ein Kanal dieser Logikschaltung 66 näher veranschaulicht ist. Die Modulationsstufe 56 bzw. 58 bzw. 60 besteht aus einem Vergleicher 68 bzw. 70 bzw. 72 und einem Komparator 74 bzw. 76 bzw. 78. Am positiven Eingang des Vergleichers 68 bzw. 70 bzw. 72 steht die Phasenstellspannung $U_{RST}$ bzw. $U_{SST}$ bzw. die korrigierte Phasenstellspannung $U_{TSt}$ an. Am ersten negativen Eingang des Vergleichers 68 bzw 70 bzw. 72 steht eine Abtastspannung $U_H$ an, die vom Abtastspannungs generator 62 erzeugt wird. Als Abtastspannung $U_H$ ist eine Dreieckspannung vorgesehen, deren Frequenz ein Vielfaches der Grundschwingungsfrequenz der Wechselrichterausgangsspannung $U_R$, $U_S$ und $U_T$ ist. Am zweiten negativen Eingang des Vergleichers 68 bzw. 70 steht ein Korrekturwert $U_{IRWS}$ bzw. $U_{ISWS}$ an. Die Modulationsstufe 56 bzw. 58 bzw. 60 erzeugt bekannterweise eine pulsbreitenmodulierte Phasenstellspannung $U_{RM}$ bzw. $U_{SM}$ bzw. $U_{TM}$. Diese pulsbreitenmodulierte Phasenstellspannungen $U_{RM}$, $U_{SM}$ und $U_{TM}$ sind der Ansteuersignaleinrichtung 64 zugeführt, die in bekannter Weise daraus sechs Ansteuersignale $U_{AT1}$ bis $U_{AT6}$ erzeugt. Jedes dieser Ansteuersignale $U_{AT1}$ bis $U_{AT6}$ wird jeweils einem Kanal der Logikschaltung 66 zugeführt, dessen Ausgänge mit den Ansteuereinrichtungen 46, 48 und 50 verbunden sind. Den Zustandseingängen jedes Kanals der Logikschaltung 66 sind mit den Ansteuereinrichtungen 46, 48 und 50 verknüpft und der Freigabeausgang eines jeden Kanals ist mit einem Steuereingang der Ansteuersignaleinrichtung 64 verbunden.

Mit dieser Wechselrichteranordnung kann die Ausgangsleistung auf 400 kVA erhöht werden, wogegen bei einer direkten Parallelschaltung von Transistormoduln, bedingt durch den mechanischen Aufbau, nur eine Leistung von 150 kVA erreicht wird. Der Aufwand für diese Wechselrichteranordnung ist im Vergleich zu einer bekannten Wechselrichteranordnung, die aus drei parallel betriebenen Wechselrichtern besteht, geringer, da für die erfindungsgemäße Wechselrichteranordnung nur drei Stellglieder (Leistungsteil) parallel betrieben werden. Für den Betrieb dieser Wechselrichteranordnung wird nur eine Regel- und Steuereinrichtung 8 benötigt, die im wesentlichen einer Regel- und Steuereinrichtung eines Teilwechselrichters entspricht. Die Regel- und Steuereinrichtung 8 ist um eine Logikschaltung 66 und einem Korrekturglied erweitert.

In Figur 2 ist ein Blockschaltbild der Stellspannungseinrichtung 52 nach Figur 1 näher dargestellt. Diese Stellspannungseinrichtung 52 enthält einen Spannungsregler 80 und einen unterlagerten Stromregler 82. Dem Spannungsregler 80 wird eine Phasenausgangsspannungsdifferenz $\Delta U_R$ zugeführt, die mittels eines Vergleichers des Istwertes der Phasenausgangsspannung $U_R$ mit dem Sollwert der Phasenausgangsspannung $U_R^*$ ermittelt ist. Als Spannungsregler 80 ist ein P-Regler vorgesehen, der die Spannungsdifferenz $\Delta U_R$ verstärkt. Dem Stromregler 82, der ebenfalls ein P-Regler ist, wir eine Kondensatorphasenstromdifferenz $\Delta I_{FR}$ zugeführt. Diese Stromdifferenz $\Delta I_{RFR}$ wird mittels eines Vergleichs des Istwertes des Kondensatorphasenstromes $I_{FR}$ mit dem Sollwert des Kondensatorphasenstromes $I_{FR}^*$ ermittelt, wobei der verstärkte Spannungsdifferenzwert $\Delta U_R$ vom Sollwert des Kondensatorphasenstromes $I_{FR}^*$ noch subtrahiert wird. Der Ausgang des Stromreglers 82 ist mit einem negativen Eingang eines Vergleichers 84 verknüpft, an dessen positivem Eingang der Sollwert der Phasenausgangsspannung $U_R^*$ ansteht. Am Ausgang des Vergleichers 84 erhält man eine Phasenstellspannung $U_{RSt}$, die der Modulationsstufe 56 zugeführt wird. Dadurch, daß der Sollwert der Phasenausgangsspannung $U_R^*$ auch direkt dem Vergleicher 84 zugeführt wird, werden auch dynamische Vorgänge (Sollwertsprünge) erfaßt.

Diese Stellspannungseinrichtung 52 enthält außerdem noch ein Korrekturglied, bestehend aus einem Summenstrombildner 86 und einem nachgeschalteten PI-Regler 88. Wenn nur statische Vorgänge berücksichtigt werden, kann anstelle des PI-Reglers 88 auch ein I-Regler verwendet werden. Dem Summenstrombildner 86 sind die Istwerte der Phasenausgangsströme $I_{RW1}$, $I_{RW2}$ und $I_{RW3}$ der drei parallel betriebenen Stellglieder 2, 4 und 6 zugeführt. Am Ausgang des Summenstrombildners 86 steht ein Phasensummenstromistwert $I_{RWS}$ an, der mittels des PI-Reglers 88 integriert wird. Am Ausgang des PI-Reglers 88 steht ein Korrekturwert $U_{IRWS}$

an, der dem Vergleicher 68 der Modulationsstufe 56 zugeführt wird. Dieses Korrekturglied ist beispielhaft in der Stellspannungseinrichtung 52 integriert.

Da die Stellglieder 2, 4 und 6 mit nicht linearen Schaltelementen aufgebaut sind und daß es auch zu aufwendig ist, die parallel betriebenen Schaltelemente so auszuwählen, daß die Kenndaten übereinstimmen, treten durch Speicherzeitdifferenzen Gleichanteile in der Ausgangsspannung der Wechselrichteranordnung auf. Die Folge wäre eine Sättigungserscheinung im Transformator 10. Mittels des Korrekturgliedes (Summenstrombildner 86 mit nachgeschaltetem PI-Regler 88) wird in jeder Phase der Wechselrichteranordnung durch phasenmäßige Addition der Phasenausgangsströme $I_{RW1}$ bis $I_{RW3}$ bzw. $I_{SW1}$ bis $I_{SW3}$ und durch Integration dieses Summenphasenistwertes $I_{RWS}$ ein möglicherweise vorhandener Gleichanteil ermittelt. Da dieser Gleichanteil als Korrekturwert $U_{IRWS}$ von der Phasenstellspannung $U_{RSt}$ subtrahiert wird, wird der Gleichanteil auf einen Wert Null geregelt.

Die unterschiedlichen Schaltzeiten der parallel betriebenen Stromrichterventile $T1_1$ bis $T1_3$ bzw. ... bzw. $T6_1$ bis $T6_3$ verursachen auch unterschiedliche Wechselstromanteile, die mittels der Transformatorschaltung 10 minimiert werden. Dabei müssen die Primär-Sekundär-Streuinduktivitäten gleich sein. Durch die reihengeschalteten Wicklungen 28 der Sekundärwicklung 22, 24 und 26 wird der Strom eingeprägt.

In Figur 3 ist ein erster Kanal der sechs-kanaligen Logikschaltung 66 näher dargestellt. An einer ersten Klemme 90 des Steuereingangs des dargestellten ersten Kanals steht ein Ansteuersignal $U_{AT1}$ an, wobei an der zweiten Klemme 92 dieses Steuereingangs eine positive Spannung P15 (+ 15 V) ansteht. Dieses Ansteuersignal $U_{AT1}$ soll gleichzeitig den Stromrichterventilen $T1_1$, $T1_2$ und $T1_3$ der drei parallel betriebenen Stellglieder 2, 4 und 6 zugeführt werden. Deshalb sind drei Optokoppler 94 sendeseitig elektrisch in Reihe geschaltet. Empfangsseitig verbindet jeder Optokoppler 94 jeweils die Basis eines Stromrichterventils, im dargestellten Beispiel die Stromrichterventile $T1_1$, $T1_2$ und $T1_3$, mit einer korrespondierenden Ansteuerschaltung, die aus Übersichtlichkeitsgründen nicht dargestellt sind, jedoch jeweils Bestandteil der Ansteuereinrichtung 46 bzw. 48 bzw. 50 sind. Von den drei Stellgliedern 2, 4 und 6 ist jeweils nur ein erster Brückenzweig 96, 98 und 100, bestehend jeweils aus zwei elektrisch in Reihe geschalteter Stromrichterventile $T1_1$ und $T2_1$ bzw. $T1_2$ und $T2_2$ bzw. $T1_3$ und $T2_3$, dargestellt. Weitere drei Optokoppler 102 sind im dargestellten ersten Kanal vorhanden, die jeweils sendeseitig den Schaltzustand des Stromrichterventils $T1_1$ bzw. $T1_2$ bzw. $T1_3$ ermittelt, indem die an den Zustandseingängen 104, 106 und 108 anstehenden Basis-Emitter-Spannungen ausgewertet werden. Empfangsseitig steuert jeder Optokoppler 102 einen von drei elektrisch in Reihe geschalteten Schalter 110. Wenn das Stromrichterventil $T1_1$ bzw. $T1_2$ bzw. $T1_3$ in den Aus-Zustand geht, wird mittels eines empfangsseitigen Aussignals $U_{off11}$ bzw. $U_{off12}$ bzw. $U_{off13}$ der Schalter 110 leitend geschaltet. An einer ersten Klemme 112 des Freigabeausgangs dieser Reihenschaltung von Schaltern 110 steht genau dann ein Freigabesignal $U_{FS1}$ an, wenn alle Schalter 110 geschlossen sind, wobei an seiner zweiten Klemme 114 eine negative Spannung N21 (- 21 V) ansteht. Dieses generierte Freigabesignal $U_{FS1}$ wird einem Steuereingang der Ansteuersignaleinrichtung 64 zugeführt.

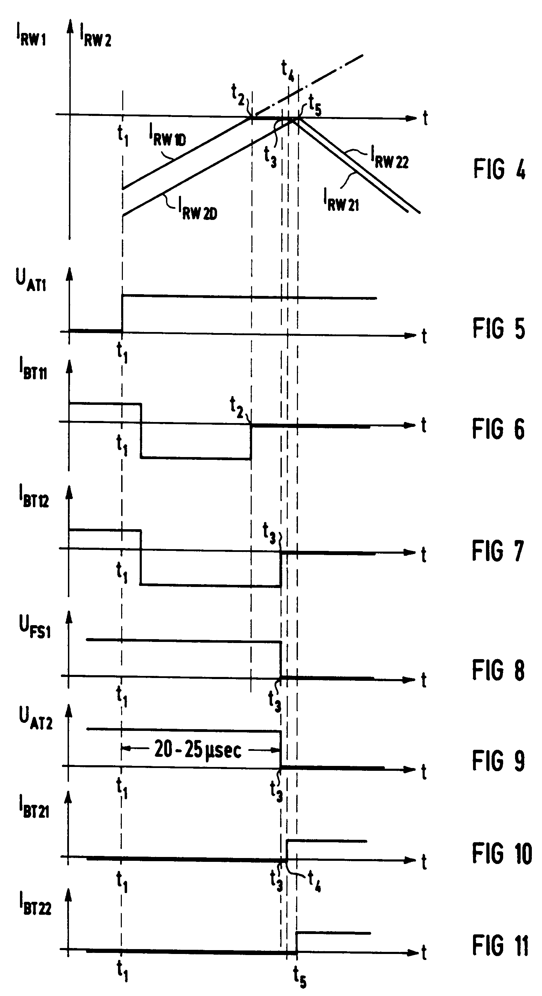

Anhand der Figuren 4 bis 11 wird nun die Wirkungsweise der Logikschaltung 66 der Regel- und Steuereinrichtung 8 nach Figur 1 näher erläutert. Zum Zeitpunkt $t_1$ wechselt das Ansteuersignal $U_{AT1}$ von low-Pegel (Ein-Zustand) in den high-Pegel (Aus-Zustand) gemäß dem Zeitverlauf der Figur 5. Dieses Ansteuersignal $U_{AT1}$ steuert gemeinsam, wie in Figur 3 dargestellt, die drei Stromrichterventile $T1_1$, $T1_2$ und $T1_3$ der drei parallel betriebenen Stellglieder 2, 4 und 6 an. Für die Erklärung der Wirkungsweise sind aus Übersichtlichkeitsgründen nur die Phasenströme $I_{RW1}$ und $I_{RW2}$ von zwei Stellgliedern 2 und 4 auszugsweise (ungefähr eine Kommutierungszeitspanne) in Figur 4 veranschaulicht. Der Phasenausgangsstrom $I_{RW1}$ bzw. $I_{RW2}$ ist zusammengesetzt aus zwei Teilströmen $I_{RW1D}$ bzw. $I_{RW2D}$ und $I_{RW21}$ bzw. $I_{RW22}$. Infolge des Ansteuersignals $U_{AT1}$ kehren sich die Basisströme $I_{BT11}$ und $I_{BT12}$ nach einer kurzen Verzögerungszeit um. Da die beiden Stromrichterventile $T1_1$ und $T1_2$ der parallel betriebenen Stellglieder 2 und 4 keine identischen Kenndaten aufweisen, sind die Speicherzeiten der beiden Stromrichterventile $T1_1$ und $T1_2$ unterschiedlich. Vom Zeitpunkt $t_1$ bis zum jeweiligen Aus-Zustand jedes Stromrichterventils $T1_1$ und $T1_2$ fließt der Teilstrom $I_{RW1D}$ bzw. $I_{RW2D}$ des Phasenausgangsstromes $I_{RW1}$ bzw. $I_{RW2}$ über eine elektrisch parallel zum Stromrichterventil $T1_1$ bzw. $T1_2$ geschaltete, nicht näher dargestellte Freilaufdiode. Zum Zeitpunkt $t_2$ ist das Stromrichterventil $T1_1$ und zum Zeitpunkt $t_3$ ist das Stromrichterventil $T1_2$ im Aus-Zustand. Da zum Zeitpunkt $t_2$ das zum Stromrichterventil $T1_1$ komplementär schaltende Stromrichterventil $T2_1$ noch nicht angesteuert wird, kann kein Phasenausgangsstrom $I_{RW1}$ mehr fließen. Zum Zeitpunkt $t_2$ wird mittels des Optokopplers 102 ein Aus-Signal $U_{off11}$ erzeugt, womit der Schalter 110 angesteuert wird (Figur 3). Zum Zeitpunkt $t_3$ wird mittels eines weiteren Optokopplers 102 ein Ausgangssignal $U_{off12}$ erzeugt, das den Aus-Zustand des Stromrichterventils $T1_2$ anzeigt und womit ein weiterer Schalter 110 angesteuert wird. Das dritte Stromrichterventil $T1_3$, das gemeinsam mit den Stromrichterventilen $T1_1$ und $T1_2$ angesteuert wird, ist entsprechend seiner Speicherzeit innerhalb der Zeitdifferenz $t_3$-$t_2$ in den Aus-Zustand, gekennzeichnet durch die Generierung eines Aus-Signals $U_{off13}$, gegangen. D.h., zum Zeitpunkt $t_3$ sind die drei elektrisch in Reihe geschalteten Schalter 110 des ersten Kanals der Logikschaltung 66 leitend geschaltet, wodurch am Freigabeausgang 112 - 114 ein Freigabesignal $U_{FS1}$, das in einem Diagramm über der Zeit t in Figur 8 dargestellt ist, ansteht. Dieses Freigabesignal $U_{FS1}$ gibt das Ansteuersignal $U_{AT2}$ für die zu den Stromrichterventilen $T1_1$, $T1_2$ und $T1_3$ komplementär schaltenden Stromrichterventilen $T2_1$, $T2_2$ und $T2_3$ frei. D.h., das Ansteuersignal $U_{AT2}$ geht vom high-Pegel (Aus-Zustand) in den low-Pegel (Ein-Zustand) gemäß Figur 9. Mit einer geringen Zeitverzögerung fließt zum Zeitpunkt $t_4$ bzw. $t_5$ der Basisstrom $I_{BT21}$ bzw. $I_{BT22}$, wodurch das Stromrichterventil $T2_1$ bzw. $T2_2$ den Teilstrom $I_{RW21}$ bzw. $I_{RW22}$ des Phasenausgangsstromes $I_{RW1}$ bzw. $I_{RW2}$ führt.

Die Zeitspanne $t_3$-$t_1$ entspricht etwa 20 bis 25 μsec.. Aufgrund der unterschiedlichen Kenndaten der Stromrichterventile $T1_1$ und $T1_2$ ist die Stromaufteilung auf die einzelnen parallel betriebenen Stellglieder 2 und 4 nicht symmetrisch, da der Phasenausgangsstrom $I_{RW1}$ (Teilstrom $I_{RW1D}$) zum Zeitpunkt $t_2$ den Wert Null bereits erreicht hat, aber der Phasenausgangsstrom $I_{RW2}$ (Teilstrom $I_{RW2D}$) erst den Wert Null zum Zeitpunkt $t_3$ erreicht. Mit dem Verfahren zum Betrieb einer Wechselrichteranordnung mit mehreren parallel betriebenen Stellgliedern 2, 4 und 6 wird erreicht, daß jeweils die parallel betriebenen Stromrichterventile $T1_1$, $T1_2$ und $T1_3$ bis $T6_1$, $T6_2$, $T6_3$ für die Regel- und Steuereinrichtung 8 jeweils als ein Stromrichterventil erscheint. Somit erhält man auch eine symmetrische Stromaufteilung auf mehrere Stellglieder, ohne dabei eine Stromausgleichsregelung zu verwenden.


## Patentansprüche

1. Verfahren zum Betrieb einer Wechselrichteranordnung mit n parallel betriebenen jeweils aus m Stromrichterventilen ($T1_n$, ..., $Tm_n$) bestehenden Stellgliedern (2, 4, 6), wobei diese n Stellglieder (2, 4, 6) eingangsseitig aus einer gemeinsamen Gleichspannungsquelle ($U_Z$) versorgt werden und ausgangsseitig mittels eines Transformators (10) mit nachgeschalteter Filterkondensatorschaltung (12) miteinander verknüpft sind, wobei jedes Stellglied (2, 4, 6) mit wenigstens m/2-1 Meßeinrichtungen (40, 42, 44) zur Erfassung von Istwerten der Phasenausgangsströme ($I_{RW1}$, $I_{SW1}$, ..., $I_{RWn}$, $I_{SWn}$) versehen ist, und wobei die Ausgänge der Wechselrichteranordnung mit Meßeinrichtungen (36, 38) zur Erfassung von Istwerten der Phasenausgangsspannung ($U_R$, $U_S$) und zur Erfassung von Istwerten der Kondensatorphasenströme ($I_{FR}$, $I_{FS}$) versehen sind, **dadurch gekennzeichnet,**
   a) daß mittels eines Vergleiches von Ist- und Sollwerten der Phasenausgangsspannungen ($U_R$, $U_S$) und eines unterlagerten Vergleiches von Ist- und Sollwerten der Kondensatorphasenströme wenigstens m/2-1 Phasenstellspannungen ($U_{RSt}$, $U_{SSt}$) erzeugt werden,
   b) daß aus m/2 erzeugten Phasenstellspannungen ($U_{RSt}$, $U_{SSt}$, $U_{TSt}$) mittels einer Abtastspannung ($U_H$) m Ansteuersignale ($U_{AT1}$, ..., $U_{ATm}$) erzeugt werden, wobei jeweils ein Ansteuersignal ($U_{AT1}$ bzw. ... bzw. $U_{ATm}$) gemeinsam n parallel betriebenen Stromrichterventilen ($T1_1$, $T1_2$, ..., $T1_n$ bzw. ... bzw. $Tm_1$, $Tm_2$, ..., $Tm_n$) der n Stellglieder (2, 4, 6) zugeführt wird,
   c) daß jeweils ein Freigabesignal ($U_{FS1}$ bzw. ... bzw. $U_{FSm}$) genau dann erzeugt wird, wenn jedes der n parallel betriebenen Stromrichterventile ($T1_1$, $T1_2$, ..., $T1_n$ bzw. ... bzw. $Tm_1$, $Tm_2$, ..., $Tm_n$) der n Stellglieder (2, 4, 6) ein Aussignal ($U_{off11}$, $U_{off12}$, ..., $U_{off1n}$ bzw. ... bzw. $U_{offm1}$, $U_{offm2}$, ..., $U_{offmn}$) generieren und
   d) daß jedes generierte Freigabesignal ($U_{FS1}$ bzw. ... bzw. $U_{FSm}$) ein Ansteuersignal ($U_{AT1}$ bzw. ... bzw. $U_{ATm}$) für n parallel betriebene komplementär schaltende Stromrichterventile ($T1_1$, $T1_2$, ... $T1_n$ bzw. ... bzw. $Tm_1$, $Tm_2$, ..., $Tm_n$) der n Stellglieder (2, 4, 6) freigibt.

2. Verfahren nach Anspruch 1, **dadurch gekennzeichnet,**
   a) daß die Istwerte der Phasenausgangsströme ($I_{RW1}$, $I_{RW2}$, ..., $I_{RWn}$ bzw. $I_{SW1}$, $ISW_2$, ..., $I_{SWn}$) phasenmäßig jeweils zu einem Phasensummenistwert ($I_{RWS}$ bzw. $I_{RSWS}$) addiert werden,
   b) daß jeder Phasensummenistwert ($I_{RWS}$ bzw. $I_{SWS}$) zu einem Korrekturwert ($U_{IRWS}$ bzw. $U_{ISWS}$) integriert wird und
   c) daß jeder Korrekturwert ($U_{IRWS}$ bzw. $U_{ISWS}$) von einer korrespondierenden Phasenstellspannung ($U_{RSt}$ bzw. $U_{SSt}$) subtrahiert wird.

3. Schaltungsanordnung zur Durchführung des Verfahrens nach Anspruch 1, **dadurch gekennzeichnet,** daß wenigstens m/2-1 Stellspannungseinrichtungen (52, 54), m/2-Modulationsstufen (56, 58, 60) und eine Ansteuersignaleinrichtung (64) mit nachgeschalteter Logikschaltung (66) vorgesehen sind, wobei jeder Stellspannungseinrichtung (52, 54) ein Ist- und ein Sollwert einer Phasenausgangsspannung ($U_R$, $U_R^*$ bzw. $U_S$, $U_S^*$) der Wechselrichteranordnung und ein Ist- und ein Sollwert eines Kondensatorphasenstromes ($I_{FR}$, $I_{FR}^*$ bzw. $I_{FS}$, $I_{FS}^*$) der Filterkondensatorschaltung (12) zugeführt sind, daß jeder der m Ausgänge der Logikschaltung (66) jeweils jedes der n parallel betriebenen Stromrichterventile ($T1_1$, $T1_2$, .. $T1_n$ bzw. ... bzw. $Tm_1$, $Tm_2$, ... $Tm_n$) mit einer Ansteuerschaltung (46, 48, 50) verbindet, daß die Schaltzustände dieser n parallel betriebenen Stromrichterventile ($T1_1$, $T1_2$, ..., $T1_n$ bzw. ..., bzw. $Tm_1$, $Tm_2$, ..., $Tm_n$) jeweils an einem der n Zustandseingänge (104, 106, 108) der Logikschaltung (66) anstehen und daß jeweils ein der m Freigabeausgänge (102) der Logikschaltung (66) mit einem Steuereingang der Ansteuersignaleinrichtung (64) verbunden ist.

4. Schaltungsanordnung nach Anspruch 3, **dadurch gekennzeichnet,** daß die Stellspannungseinrichtung (52, 54) einen Summenstrombildner (86) mit nachgeschaltetem I-Regler enthält, wobei der Ausgang des I-Reglers mit einem zweiten negativen Eingang eines Vergleichers (68, 70) der Modulationsstufe (56, 58) verbunden ist und wobei an den Eingängen des Summenstrombildners (86) die Istwerte der Phasenausgangsströme ($I_{RW1}$, $I_{RW2}$, ..., $I_{RWn}$ bzw. $I_{SW1}$, $I_{SW2}$, ..., $I_{SWn}$) der n Stellglieder (2, 4, 6) anstehen.

5. Schaltungsanordnung nach Anspruch 3, **dadurch gekennzeichnet,** daß die Logikschaltung (66) mxnx2 Optokoppler (94, 102) enthält, wobei jeweils n Optokoppler (94) sendeseitig elektrisch in Reihe geschaltet sind und jeweils mit einem der m Ansteuersignale ($U_{AT1}$, ..., $U_{ATm}$) beaufschlagt sind, daß jeweils diese n Optokoppler (94) empfangsseitig jeweils einen der n parallel betriebenen Stromricherventilen ($T1_1$, $T1_2$, .. $T1_n$ bzw. ... bzw. $Tm_1$, $Tm_2$, $Tm_n$) mit der korrespondierenden Ansteuereinrichtung (46, 48, 50) elektrisch leitend verbindet und daß jeweils n Optokoppler (102) sendeseitig jeweils mit der Basis und dem Emitter einer der n parallel betriebenen Stromrichterventilen ($T1_1$, $T1_2$, ... $T1_n$ bzw. ... bzw. $Tm_1$, $Tm_2$, ..., $Tm_n$) verbunden ist, wobei diese n Optokoppler (102) empfangsseitig jeweils einen von n elektrisch in Reihe geschalteter Schalter (110) betätigen, wobei am Ausgang (112) dieser Reihenschaltung eines der m Freigabesignale ($U_{FS1}$, $U_{FSm}$) abnehmbar ist.

6. Schaltungsanordnung nach Anspruch 4, **dadurch gekennzeichnet,** daß dem Summenstrombildner (86) ein PI-Regler (88) nachgeschaltet ist.

7. Wechselrichteranordnung mit n parallel betriebenen jeweils aus m Stromrichterventilen ($T1_n$, ., $Tm_n$) bestehenden Stellgliedern (2, 4, 6) und mit einer Schaltungsanordnung nach Anspruch 3, wobei diese n Stellglieder (2, 4, 6) eingangsseitig aus einer Gleichspannungsquelle ($U_Z$) versorgt werden und ausgangsseitig mittels eines Transformators (10) mit nachgeschalteter Filterkondensatorschaltung (12) miteinander verknüpft sind, wobei jedes Stellglied (2, 4, 6) mit wenigstens m/2-1 Meßein richtungen (40, 42, 44) zur Erfassung von Istwerten der Phasenausgangsströme ($I_{RW1}$, $I_{RW2}$, ..., $I_{RWn}$, $I_{SW1}$, $I_{SW2}$, ..., $I_{SWn}$) versehen ist, und wobei die Ausgänge der Wechselrichteranordnung mit Meßeinrichtungen (36, 38) zur Erfassung von Istwerten der Phasenausgangsspannungen ($U_R$, $U_S$) und zur Erfassung von Istwerten der Kondensatorphasenströme ($I_{FR}$, $I_{FS}$) versehen sind, **dadurch gekennzeichnet,** daß der Transformator (10) n Primär und Sekundärwicklungen (14, 16, 18 und 22, 24, 26) aufweist, wobei jede n-te Primärwicklung (14, 16, 18) und jede n-te Sekundärwicklung (22, 24, 26) jeweils aus m/2 Wicklungen (20, 28) bestehen, wobei die m/2 Wicklungen (20) jeder n-ten Primärwicklung (14, 16, 18) zu einem m/2-Eck verbunden sind und wobei jeweils die m/2-te Wicklung (28) der n Sekundärwicklungen (22, 24, 26) elektrisch in Reihe geschaltet sind.

## Claims

1. A method of operating an inverter arrangement with n parallel operated servo components (2, 4, 6) each consisting of m converter valves $T1_n$, ..., $Tm_n$), where these n servo components (2, 4, 6) are supplied at their input end from a common d.c. voltage source ($U_Z$) and at their output end are linked to one another by means of a transformer (10) followed by a filter capacitor circuit (12), where each servo component (2, 4, 6) is provided with at least m/2-1 measuring devices (40, 42, 44) for detecting actual values of the phase output currents ($I_{RW1}$, $I_{SW1}$, ..., $I_{RWn}$, $I_{SWn}$) and where the outputs of the inverter arrangement are provided with measuring devices (36, 38) for detecting actual values of the phase output voltage ($U_R$, $U_S$) and for detecting actual values of the capacitor phase currents ($I_{FR}$, $I_{FS}$), characterised in that

a) by means of a comparison of actual- and setpoint values of the phase output voltages ($U_R$, $U_S$) and a secondary comparison of actual and setpoint values of the capacitor phase currents at least m/2-1 phase control voltages ($U_{RSt}$, $U_{SSt}$) are generated,

b) that from m/2 generated phase control voltages ($U_{RSt}$, $U_{SSt}$, $U_{TSt}$) m drive signals ($U_{AT1}$, ..., $U_{ATm}$) are generated by means of a sampling voltage ($U_H$), where in each case one drive signal ($U_{AT1}$ and ... and

$U_{ATm}$ respectively) is commonly supplied to n parallel operated converter valves ($T1_1$, $T1_2$, ..., $T1_n$ and ... and $Tm_1$, $Tm_2$, ..., $Tm_n$) of the n servo components (2, 4, 6),

c) that in each case one enable signal ($U_{FS1}$ and ... and $U_{FSm}$) is generated precisely when each of the n parallel operated converter valves ($T1_1$, $T1_2$, ..., $T1_n$ and ... and $Tm_1$, $Tm_2$, ..., $Tm_n$) of the n servo components (2, 4, 6) generate an off-signal ($U_{off11}$, $U_{off12}$, ..., $U_{off1n}$ and ... and $U_{offm1}$, $U_{offm2}$, ..., $U_{offmn}$) and

d) that each generated enable signal ($U_{FS1}$ and ... and $U_{FSm}$) enables a drive signal ($U_{AT1}$ and .. and $U_{ATm}$) for n parallel operated converter valves ($T1_1$, $T1_2$, ..., $T1_n$ and ... and $Tm_1$, $Tm_2$, ..., $Tm_n$), switching in complementary fashion, of the n servo components (2, 4, 6).

2. A method as claimed in Claim 1, characterised in that

a) the actual values of the phase output currents ($I_{RW1}$, $I_{RW2}$, ..., $I_{RWn}$ and $I_{SW1}$, $I_{SW2}$, ..., $I_{SWn}$) are in each case added in phase to form a phase sum actual value ($I_{RWS}$ and $I_{RSWS}$),

b) that each phase sum actual value ($I_{RWS}$ and $I_{SWS}$) is integrated to form a correction value ($U_{IRWS}$ and $U_{ISWS}$) and

c) that each correction value ($U_{IRWS}$ and $U_{ISWS}$) is subtracted from a corresponding phase control voltage ($U_{RSt}$, and $U_{SSt}$).

3. A circuit arrangement for the implementation of the method claimed in Claim 1, characterised in that at least m/2-1 control voltage devices (52, 54), m/2 modulation stages (56, 58, 60) and one drive signal device (64) followed by a logic circuit (66) are provided, where each control voltage device (52, 54) is supplied with an actual- and a setpoint value of a phase output voltage ($U_R$, $U_R*$ and $U_S$, $U_S*$) of the inverter arrangement and with an actual- and a setpoint value of a capacitor phase current ($I_{FR}$, $I_{FR}*$ and $I_{FS}$, $I_{FS}*$) of the filter capacitor circuit (12), that each of the m outputs of the logic circuit (66) in each case connects each of the n parallel operated converter valves ($T1_1$, $T1_2$, ..., $T1_n$ and ... and $Tm_1$, $Tm_2$, ..., $Tm_n$) to a drive circuit (46, 48, 50), that the switching states of these n parallel operated converter valves ($T1_1$, $T1_2$, ..., $T1_n$ and ..., and $Tm_1$, $Tm_2$, ..., $Tm_n$) in each case are present at one of the n status inputs (104, 106, 108) of the logic circuit (66) and that in each case one of the m enable outputs (102) of the logic circuit (66) is connected to a control input of the drive signal device (64).

4. A circuit arrangement as claimed in Claim 3, characterised in that the control voltage device (52, 54) comprises a sum current forming device (86) followed by a I-regulator, where the output of the I-regulator is connected to a second negative input of a comparator (68, 70) of the modulation stage (56, 58) and where the actual values of the phase output currents ($I_{RW1}$, $I_{RW2}$, ..., $I_{RWn}$ and $I_{SW1}$, $I_{SW2}$, ..., $I_{SWn}$) of the n servo components (2, 4, 6) are present at the inputs of the sum current forming device (86).

5. A circuit arrangement as claimed in Claim 3, characterised in that the logic circuit (66) comprises m x n x 2 optocouplers (94, 102), where in each case n optocouplers (94) are electrically connected in series at the transmitting end and are in each case supplied with one of the m drive signals ($U_{AT1}$, .., $U_{ATm}$) that these n optocouplers (94) in each case electrically conductively connect one of the n parallel operated converter valves ($T1_1$, $T1_2$, ..., $T1_n$ and ... and $Tm_1$, $Tm_2$, $Tm_n$) to the corresponding drive device (46, 48, 50) at the receiving end, and that in each case n optocouplers (102) are connected to the base and the emitter of one of the n parallel operated converter valves ($T1_1$, $T1_2$, ..., $T1_n$ and ... and $Tm_1$, $Tm_2$, ..., $Tm_n$) at the transmitting end, where these n optocouplers (102) in each case actuate one of n electrically series-connected switches (110) at the receiving end and where one of the m enable signals ($U_{FS1}$, ... $U_{FSm}$) can be picked up at the output (112) of this series arrangement.

6. A circuit arrangement as claimed in Claim 4, characterised in that a PI-regulator (88) is connected to the output end of the sum current forming device (86).

7. An inverter arrangement with n parallel operated servo components (2, 4, 6) in each case consisting of m converter valves ($T1_n$, ..., $Tm_n$) and with a circuit arrangement according to Claim 3, where these n servo components (2, 4, 6) are supplied at the input end from a d.c. voltage source ($U_Z$) and at the output end are linked to one another by means of a transformer (10) followed by a filter capacitor circuit (12), where each servo component (2, 4, 6) is provided with at least m/2-1 measuring devices (40, 42, 44) for detecting actual values of the phase currents ($I_{RW1}$, $I_{RW2}$, ..., $I_{RWn}$, $I_{SW1}$, $I_{SW2}$, ..., $I_{SWn}$) and where the outputs of the inverter arrangement are provided with measuring devices (36, 38) for detecting actual values of the phase output voltages ($U_R$, $U_S$) and for detecting actual values of the capacitor phase currents ($I_{FR}$, $I_{FS}$), characterised in that the transformer (10) comprises n primary- and secondary windings (14, 16, 18 and 22, 24, 26), where each n-th primary winding (14, 16, 18) and each n-th secondary winding (22, 24, 26) in each case consists of m/2 windings (20, 28), where the m/2 windings (20) of each n-th primary winding (14, 16, 18) are connected to form a m/2-gon and where the respective m-th windings (28) of the n secondary windings (22, 24, 26) are electrically connected in series.

**Revendications**

1. Procédé pour faire fonctionner un dispositif onduleur comportant n éléments (2,4,6) de réglage fonctionnant en parallèle et constitués respectivement de m valves ($T1_n$,...,$Tm_n$) redresseuses de courant, ces n éléments (2,4,6) de réglage étant alimentés côté entrée par une source ($U_Z$) commune de tension continue et étant combinés l'un à l'autre côté sortie au moyen d'un transformateur (10) comportant un circuit (12) de condensateurs de filtrage branché en aval, chaque élément (2,4,6) de réglage étant muni d'au moins m/2-1 dispositifs (40,42,44) de mesure destinés à détecter des valeurs réelles des courants ($I_{RW1}$, $I_{SW1}$, ... $I_{RWn}$, $I_{SWn}$) de sortie des phases, et les sorties du dispositif onduleur étant pourvues de dispositifs (36,38) de mesure destinés à détecter des valeurs réelles de la tension ($U_R$, $U_S$) de sortie des phases et destinés à détecter des valeurs réelles des courants ($I_{FR}$, $I_{FS}$) des phases aux condensateurs, caractérisé en ce que

   a) on génère, par comparaison de valeurs réelles et de valeurs de consigne des tensions ($U_R$, $U_S$) de sortie des phases et par comparaison asservie de valeurs réelles et de valeurs de consigne des courants des phases aux condensateurs, au moins m/2-1 tensions ($U_{RSt}$, $U_{SSt}$) de commande des phases,

   b) on génère m signaux ($U_{AT1}$, $U_{ATm}$) de commande à partir de m/2 tensions ($U_{RSt}$, $U_{SSt}$, $U_{TSt}$) produites de commande des phases au moyen d'une tension ($U_H$) d'échantillonnage, un signal ($U_{AT1}$ ou ... $U_{ATm}$) de commande étant envoyé en commun à chacune des n valves ($T1_1$, $T1_2$, ..., $T1_n$ ou ... $Tm_1$, $Tm_2$, ..., $Tm_n$) redresseuses de courant fonctionnant en parallèle des n éléments (2,4,6) de réglage,

   c) on génère un signal ($U_{FS1}$ ou $U_{FSm}$) de libération au moment précis où chacune des n valves ($T1_1$, $T1_2$, ..., $T1_n$ ou..... $Tm_1$, $Tm_2$,..., $Tm_n$) redresseuses de courant fonctionnant en parallèle des n éléments (2,4,6) de réglage un signal ($U_{off11}$, $U_{off12}$, ..., $U_{off1n}$ ou ... ou $U_{offm1}$, $U_{offm2}$, ..., $U_{offmn}$) de sortie et

   d) chaque signal ($U_{FS1}$ ou ... $U_{FSm}$) déclenche un signal ($U_{AT1}$ ou ... ou $U_{ATm}$) de commande pour n valves ($T1_1$, $T1_2$, ..., $T1_n$ ou ... $Tm_1$, $Tm_2$, ..., $Tm_n$) redresseuses de courant, qui fonctionnent en parallèle et qui sont branchées de façon complémentaire, des n éléments (2,4,6) de réglage.

2. Procédé suivant la revendication 1, caractérisé en ce que

   a) on additionne les phases des valeurs réelles des courants ($I_{RW1}$, $I_{RW2}$, ..., $I_{RWn}$ ou $I_{SW1}$, $I_{SW2}$, ..., $I_{SWn}$) de sortie des phases pour former une valeur réelle ($I_{RWS}$ ou $I_{SWS}$) de somme des phases,

   b) on intègre chaque valeur réelle ($I_{RWS}$ ou $I_{SWS}$) de somme des phases pour former une valeur ($U_{IRWS}$ ou $U_{ISWS}$) de correction et

   c) on soustrait chaque valeur ($U_{IRWS}$ ou $U_{ISWS}$) de correction, d'une tension ($U_{RSt}$ ou $U_{SSt}$) correspondante de commande de phase.

3. Montage pour mettre en oeuvre le procédé suivant la revendication 1, caractérisé en ce qu'il est prévu au moins m/2-1 dispositifs (52,54) de tension de commande, m/2 étages (56,58,60) de modulation et un dispositif (64) de signal de commande à circuit (66) logique branché en aval, une valeur réelle et une valeur de consigne d'une tension ($U_R$, $U_R*$ ou $U_S$, $U_S*$) de sortie des phases du dispositif onduleur et une valeur réelle et une valeur de consigne d'un courant ($I_{FR}$, $I_{FR}*$ ou $I_{FS}$, $I_{FS}*$) des phases aux condensateurs du circuit (12) à condensateurs de filtrage étant envoyée à chaque dispositif (52,54) de tension de commande, chacune des m sorties du circuit logique (66) relie chacune des n valves ($T1_1$, $T1_2$ ..., $T1_n$ ou ... $Tm_1$, $Tm_2$, ..., $Tm_n$) redresseuses de courant fonctionnant en parallèle à un circuit (46,48,50) de commande, les états de commutation de ces n valves ($T1_1$, $T1_2$, ..., $T1_n$ ou ... $Tm_1$, $Tm_2$, ..., $Tm_n$) redresseuses de courant fonctionnant en parallèle s'appliquent respectivement à l'une des n entrées (104,106,108) d'état du circuit logique (66) et l'une des m sorties (102) de libération du circuit logique (66) est reliée à une entrée de commande du dispositif (64) de signal de commande.

4. Montage suivant la revendication 3, caractérisé en ce que le dispositif (52,54) de tension de commande comprend un dispositif (86) de formation de courant de somme comportant un régulateur par action intégrale branché en aval, la sortie du régulateur par action intégrale étant reliée à une deuxième entrée négative d'un comparateur (68, 70) de l'étage (56,58) de modulation et les valeurs réelles des courants ($I_{RW1}$, $I_{RW2}$, ..., $I_{RWn}$ ou $I_{SW1}$, $I_{SW2}$, ..., $I_{SWn}$) de sortie des phases des n éléments (2,4,6) de réglage s'appliquant aux entrées du dispositif (86) de formation de courant de somme.

5. Montage suivant la revendication 3, caractérisé en ce que le circuit logique (66) comprend mxnx2 coupleurs (94,102) opto-électroniques, les n coupleurs (94) opto-électroniques étant branchés électriquement en série côté émission et étant chargés respectivement par l'un des m signaux ($U_{AT1}$, ..., $U_{ATm}$) de commande, ces n coupleurs (94) opto-électroniques relient par conduction électrique, côté réception, respectivement l'une des n valves ($T1_1$, $T1_2$, ..., $T1_n$ ou ... $Tm_1$, $Tm_2$, $Tm_n$) redresseuses de courant fonctionnant en parallèle au dispositif (46,48,50) de commande correspondant et les n coupleurs (102) optoélectroniques sont reliés côté émission respectivement à la base et à l'émetteur de l'une des n valves ($T1_1$, $T1_2$ ..., $T1_n$ ou ... $Tm_1$, $Tm_2$, $Tm_n$) redresseuses de courant fonctionnant en parallèle, ces n coupleurs (102) opto-électroniques actionnant côté réception respectivement l'un des n interrupteurs (110) branchés électriquement en série, l'un des m signaux ($U_{FS1}$, ..., $U_{FSm}$) de libération pouvant être prélevé à la sortie (112) de ce branchement en série.

6. Montage suivant la revendication 4, caractérisé en ce qu'un régulateur (88) à action proportionnelle et intégrale est branché en amont du dispositif (86) de formation du courant de somme.

7. Montage onduleur comportant n éléments (2,4,6) de réglage constitués respectivement de n valves ($T1_n$, ..., $Tm_n$) redresseuses de courant et un montage suivant la revendication 3, ces n éléments (2,4,6) de réglage étant alimentés côté entrée par une source ($U_Z$) de tension continue et étant combinées l'une à l'autre côté sortie au moyen d'un transformateur (10) à circuit (12) de condensateur de filtrage branché en aval, chaque élément (2,4,6) de réglage étant pourvu d'au moins m/2-1 dispositifs (40,42,44) de mesure destiné à détecter des valeurs réelles des courants ($I_{RW1}$, $I_{RW2}$, ..., $I_{RWn}$, $I_{SW1}$, $I_{SW2}$, ..., $I_{SWn}$) de sortie des phases, et les sorties du montage onduleur étant pourvues de dispositifs (36,38) de mesure destinés à détecter des valeurs réelles des tensions ($U_R$, $U_S$) de sortie des phases et destinés à détecter des valeurs réelles des courants ($I_{FR}$, $I_{FS}$) des phases aux condensateurs, caractérisé en ce que le transformateur (10) comporte n enroulements (14,16,18 et 22,24,26) primaires et secondaires, chaque n-ième enroulement (14,16,18) primaire et chaque n-ième enroulement (22,24,26) secondaire étant constitué respectivement de m/2 bobinages (20,28), les m/2 bobinages (20) de chaque n-ième enroulement (14,16,18) primaires étant reliés en un polygone à m/2 côtés et les m/2-ièmes bobinages (28) des n enroulements (22,24,26) secondaires étant branchés électriquement en série.

FIG 1A

EP 0 526 453 B1

FIG 1B

EP 0 526 453 B1

FIG 2

FIG 3

13

FIG 4

FIG 5

FIG 6

FIG 7

FIG 8

FIG 9

FIG 10

FIG 11